# EUROPEAN PATENT APPLICATION

(11) **EP 1 635 137 A1**
(43) Date of publication of application: **15.03.2006**
(21) Application number: 04748910.9
(22) Date of filing: 24.05.2004
(51) Int. Cl.: G01B 9/02, G01J 9/02

(54) **OPTICAL DEVICE FOR STUDYING AN OBJECT**

(30) Priority: 27.05.2003 RU 2003115905
(71) Applicant: Imalux Corporation ., Cleveland, Ohio 44114 (US)
(72) Inventor: GELIKONOV, Grigory Valentinovich, Nizhny Novgorod, 603163 (RU); GELIKONOV, Valentin Mikhailovich, Nizhny Novgorod, 603136 (RU); FELDCHTEIN, Felix Isaakovich, Cleveland, OH 44143 (US)
(74) Representative: Roos, Peter
(86) International application number: PCT/RU2004/000195
(87) International publication number: WO 2004/106849

(57) **Abstract**

The developed device for studying an object ensures straightforward ultimate matching between the arms of an optical interferometer and therefore, high in-depth resolution when being used in clinical and industrial applications. According to the invention at least one arm of the optical interferometer of the device comprises at least one replaceable part with preset optical properties. The preset optical properties of the replaceable part of the one arm of the optical interferometer are determined by the optical properties of at least a part of the other arm of the optical interferometer, such as of the optical fiber probe. That makes it possible, for example, to supply the device with a kit of replaceable sets, which include an optical fiber probe and a replaceable part of the reference arm made of the same reel of optical fiber. Using these sets in clinical and industrial applications is most effective and does not call for highly qualified personnel. The preset optical properties of the replaceable part of one of the arms of the optical interferometer may also be determined by the optical properties of the source of low coherence optical radiation or by the optical properties of the object being studied. The device can be made of bulk optical elements or with the use of optical fiber, which may be single mode and/or polarization maintaining optical fiber.

## Description

### Technical field

The present invention relates to physical engineering, in particular, to the study of the internal structure of objects by optical means, and can be applied for imaging an object using reflectomety or optical coherence tomography methods for medical diagnostics of individual organs and systems including *in vivo* or *in vitro* diagnostics, as well as for industrial diagnostics such as control of technological processes.

### Background art

A virtue of devices applied for studying objects with the use of low coherence optical radiation is a potential for acquiring images of turbid media with high spatial resolution as well as noninvasive diagnostics in medical studies and non-destructive control in diagnostics of various equipment. Devices of the type comprise a low coherence light source optically coupled with an optical interferometer. Optical interferometers being part of low coherence reflectometers and devices for low coherence tomography are rather well known (see, for example, U.S. Pat. No. 5,321,501; U.S. Pat. No. 5,383,467; U.S. Pat. No. 5,459,570; U.S. Pat. No. 5,582,171; U.S. Pat. No. 6,134,003; U.S. Pat. No. 6657727, etc.). Sometimes the optical interferometer is fully or partially implemented by using bulk optic elements (U.S. Pat. No. 5,383,467), but more often optical interferometers for these applications are made fiber-optic (U.S. Pat. No. 5,321,501; U.S. Pat. No. 5,459,570; U.S. Pat. No. 5,582,171).

The optical interferometer is typically designed either as a Michelson optical fiber interferometer (see, e.g., X.Clivaz et al. "High resolution reflectometry in biological tissues", Opt.Lett. /Vol.17, No. 1/January 1, 1992; J.A.Izatt, J.G.Fujimoto et al, "Optical coherence microscopy in scattering media", Opt.Lett./ Vol.19, No. 8/April 15, 1994, p.590-592), or as a Mach-Zender optical fiber interferometer (see, e.g., J.A.Izatt, J.G.Fujimoto et al. "Micron-resolution Biomedical Imaging with optical coherence tomography", Optics & Photonic News, October 1993, Vol.4, No.10, p.14-19; U.S. Pat. No. 5,582,171). Regardless of the specific design used, an optical interferometer typically comprises one or two beam splitters, a measuring arm, a reference arm, and at least one photodetector. The measuring arm includes, as a rule a measuring probe, which is most often an optical fiber probe, (e.g., A.Sergeev et al, "In vivo optical coherence tomography of human skin microstructure", Proc.SPIE, v.2328, 1994, p.144; X.J.Wang et al. Characterization of human scalp hairs by optical low coherence reflectometry. Opt. Lett./Vol.20, No.5, 1995, pp.524-526). In a Michelson interferometer the measuring and reference arms are bi-directional with a reference mirror placed at the end of the reference arm. In a Mach-Zehnder interferometer the measuring and reference arms are unidirectional. Also known from prior art are hybrid interferometers in which the measuring arm is unidirectional, while the reference arm is bi-directional (e.g. U.S. Pat. No. 6,657,727).

It should be noted that there exists a fundamental problem in designing an optical interferometer of any named topology, being part of a low coherence reflectometer or a device for optical coherence tomography. The problem is in the necessity of close matching between the two arms of the optical interferometer for their optical path lengths and dispersion properties. Non-compliance with this proviso leads to a widening of the cross-correlation function and as a consequence to a decrease in the in-depth resolution. To compensate the dispersion mismatch which may occur due to a possible difference in the optical path lengths of the optical interferometer arms or is caused by focusing optical elements used in the measuring arm, prior art devices include a dispersion compensation unit in the reference arm (e.g. U.S. Pat. No. 5,459,570; U.S. Pat. No. 5,975,697; U.S. Pat. No. 6,134,003).

Thus the prior art device, according to U.S. Pat. No. 6,134,003 comprises a low coherence light source optically coupled with an optical interferometer, which includes a measuring arm and a reference arm. The measuring arm includes a probe, while the reference arm includes a dispersion compensation unit comprising either a piece of optical fiber or appropriate bulk optical elements. At least one arm may include an optical delay line, and the probe may include a lateral scanner. A qualified researcher using this device in laboratory conditions can achieve a required dispersion matching and hence a quite high in-depth resolution by selecting the necessary amount of optical fiber and/or appropriate optical elements.

However*, in vivo* or *in vitro* clinical trials, as well as industrial diagnostics are conducted by users who as a rule are not highly qualified in low coherence engineering and are not able to take care of an in-service mismatch between the interferometer arms. Since devices for low coherence optical tomography and reflectometry are fairly expensive, the same apparatus being equipped with replaceable probes may be used with different sources of low coherence optical radiation and for studying a variety of objects. A replacement of the probe may be caused by its malfunction too. Changing the source of low coherence optical radiation, switching to another object or replacing the probe generally results in disruption of the initial calibration adjustments and dispersion compensation becomes necessary. The later is especially important when an optical fiber probe is replaced because manufactured optical fiber has a broad dispersion tolerance that leads to a mismatch between the interferometer arms and reduced in-depth resolution.

### Summary of the invention

The present invention is directed to a device for studying an object which by simple means ensures ultimate matching between the arms of the optical interferometer and accordingly, high in-depth resolution when being used in clinical and industrial applications.

The developed device for studying an object, similarly to that known from U.S. Pat. No. 6,134,003 comprises a low coherence light source optically coupled with an optical interferometer, which includes a measuring arm and a reference arm, the measuring arm including a probe.

Unlike the known device, according to the invention at least one arm of the optical interferometer comprises at least one replaceable part with preset optical properties.

In one embodiment the probe is made replaceable.

In another embodiment the probe is made as an optical fiber probe.

In another embodiment the preset optical properties of the replaceable part of one arm of the optical interferometer are determined by the optical properties of at least a part of the other arm of the optical interferometer.

In a particular embodiment the reference arm includes at least one replaceable part whose preset optical properties are determined by the optical properties of the probe.

It is desirable that the replaceable part of the reference arm whose optical properties are determined by the optical properties of the probe, is made of optical fiber.

It is preferable to supply the optical device with at least one set, which includes an optical fiber probe and a replaceable part of the reference arm.

In one embodiment the optical fiber probe and the replaceable part of the reference arm are made of reels of optical fiber with substantially identical dispersion properties.

In another embodiment the optical fiber probe and the replaceable part of the reference arm are made of the same reel of optical fiber.

In another embodiment the optical fiber probe and the replaceable part of the reference arm are made of reels of optical fiber with diverse dispersion properties.

In a specific embodiment the measuring arm and the reference arm of the optical interferometer are made bi-directional, whereas the physical length of the replaceable part of the reference arm is substantially equal to the physical length of the probe.

In another specific embodiment the measuring arm of the optical interferometer is made bi-directional, while the reference arm of the optical interferometer is made unidirectional, herewith the physical length of the replaceable part of the reference arm is substantially double the physical length of the probe.

In another specific embodiment the measuring arm of the optical interferometer is made unidirectional, while the reference arm of the optical interferometer is made bi-directional, herewith the physical length of the replaceable part of the reference arm is substantially half the physical length of the probe.

In another embodiment the preset optical properties of the replaceable part of at least one arm of the optical interferometer are determined by the optical properties of the source of low coherence optical radiation.

In another particular embodiment the preset optical properties of the replaceable part of at least one arm of the optical interferometer are determined by the optical properties of the object being studied.

In another particular embodiment at least one replaceable part of at least one arm of the optical interferometer is made of bulk optical elements.

In another embodiment at least one arm of the optical interferometer includes an optical delay line.

In another embodiment at least one arm of the optical interferometer includes a phase modulator.

In another embodiment at least one arm of the optical interferometer is made of optical fiber.

In another embodiment the optical fiber is a single mode optical fiber.

In another embodiment the optical fiber is a polarization maintaining optical fiber.

In another embodiment the probe includes a lateral scanner.

In another embodiment the source of optical radiation is a source of visible or near IR optical radiation.

In another embodiment the replaceable part of an arm of the optical interferometer is connected with a non-replaceable part of the same arm of the optical interferometer via at least one detachable connector.

In another embodiment the reference arm includes a dispersion compensation unit.

The designed optical device for studying an object has at least one replaceable part with preset optical properties in at least one arm of the optical interferometer of the device. Therewith preset optical properties of the replaceable part of one arm of the optical interferometer may be determined, for example, by the optical properties of at least a part of the other arm of the optical interferometer, or by the optical properties of the source of low coherence optical radiation, or by the optical properties of the object being studied. The device can be supplied with a kit of replaceable sets, each of one including an optical fiber probe and a corresponding replaceable part of the reference arm. These sets can be straightforwardly used in medical and industrial applications providing for ultimate matching between the arms of the optical interferometer, and thereby high in-depth resolution.

### Brief Description of Drawings

The features of the invention will be apparent from the following detailed description of preferred embodiments with reference to the accompanying drawing, which is a schematic diagram of the suggested optical device for studying an object.

### Detailed Description of the Invention

The developed device is illustrated with specific reference to a device for optical coherence tomography with an optical fiber interferometer being part of it. However, it is evident that the device can be implemented as a reflectometer, while the optical interferometer or any part of it can be made using bulk optic elements.

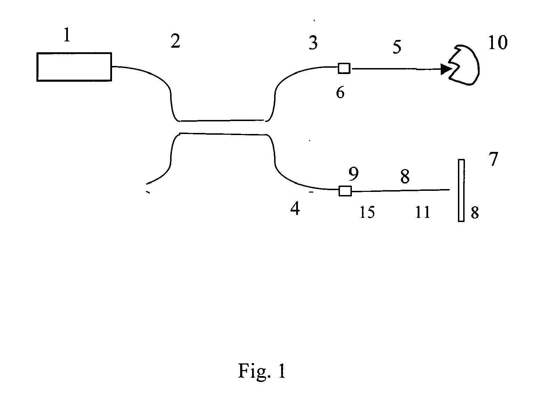

The device for studying the object, whose schematic diagram is shown in Fig. 1, operates as follows.

A source 1 forms a low coherence optical radiation, in a preferred embodiment, in the visible or IR range. This optical radiation is directed to an optical interferometer 2, which is optically coupled with the source 1. The source 1 can be arranged, for example, as a semiconductor superluminescent diode, doped-fiber amplified spontaneous emission superlum, solid state or fiber-optic femtosecond laser. In a specific embodiment the optical interferometer is made as a Michelson interferometer and comprises a measuring arm 3 and a reference arm 4, the measuring arm 3 including an optical fiber probe 5. The optical fiber probe 5 can have any design known in the art, for example, it can be an endoscope, endoscopic probe, catheter, guidewire, needle, or it may be implanted into the body, providing instant access to the internal organ. The probe 5 can include a lateral scanning system, which can be made analogous to that of the probe disclosed in RU Pat. No. 2148378.

In the particular embodiment referred to in Fig. 1, the optical fiber probe 5 is made replaceable and is connected with the remaining part of the optical interferometer 2 via a detachable connector 6. If the optical interferometer 2 is made with the use of polarization-maintaining fiber, the detachable connector 6 should be polarization-maintaining as well. When the probe 5 is designed to image a circumference (e.g., a catheter for intravascular imaging), it can be connected with the remaining part of the interferometer 2 by a rotary connector. The reference arm 4 includes a reference mirror 7 at its end. The reference arm 4 may include a dispersion compensation unit, which is used for factory-calibration of the device (not shown in the drawing).

At least one arm of the optical interferometer 2 may include an optical delay line, or a phase modulator for changing the difference between the optical path lengths of the measuring arm 3 and the reference arm 4, i.e. to perform in-depth scanning of the object 10. The optical delay line may be made as an in-line optical fiber delay line according to RU Pat. No. 2100787 (not shown in the drawing). However, any other means for changing the optical path length known in the art can be used as well, such as delay lines based on moving mirror(s), moving prism(s), diffraction grating line, rotating mirrors, prisms, cams and helicoid mirrors.

At least one arm the optical interferometer 2 includes at least one replaceable part with preset optical properties. In the embodiment shown the reference arm 4 comprises a replaceable part 8. The preset optical properties of the replaceable part of one arm of the optical interferometer 2 are determined by the optical properties of at least a part of the other arm of the optical interferometer 2. In the embodiment shown, namely, the preset optical properties of the replaceable part 8 of the reference arm 4 are determined by the optical properties of the optical fiber probe 5.

When the interferometer 2 is built as a Michelson interferometer, the measuring arm and the reference arm are bi-directional. Therefore the physical length of the replaceable part 8 of the reference arm 4 is substantially equal to the physical length of the optical fiber probe 5. In the preferred embodiment the optical fiber probe 5 and the replaceable part 8 of the reference arm 4 are made of the same reel of optical fiber, being part of one replaceable set. The replaceable part 8 of the reference arm 4 is connected with the non-replaceable part of the reference arm 4 via at least one detachable connector 9.

When another design of the optical interferometer 2 is used, in which the measuring arm 3 is bi-directional, while the reference arm 4 is unidirectional, then the physical length of the replaceable part 8 of the reference arm 4 is substantially double the physical length of the probe 5. In a design of the optical interferometer 2 with a unidirectional measuring arm 3 and bi-directional reference arm 4 the physical length of the replaceable part 8 of the reference arm 4 is substantially half the physical length of the probe 5.

Performing studies at two wavelengths might lead to a necessity for dispersion compensation upon switching from one wavelength to another. In this case a replaceable set is used, in which the optical fiber probe 5 and the replaceable part 8 of the reference arm 4 are made of reels of optical fiber with diverse dispersion properties.

The preset optical properties of the replaceable part of the arm 3 or of the arm 4 of the optical interferometer 2 may be determined by the optical properties of the source 1 of low coherence optical radiation. Or the preset optical properties of the replaceable part of the arm 3 or of the arm 4 of the optical interferometer 2 may be determined by the optical properties of the object 10 being studied.

The optical fiber probe 5, being part of the measuring arm 3 delivers the optical radiation to the object 10. The interferometer 2 produces an interference signal by mixing the optical radiations that past along the measuring arm 3 and the reference arm 4. If the optical fiber probe 5 is changed, the replaceable part 8 of the reference arm 4 is changed too by using the matching replaceable part 8 of the reference arm 4 from a corresponding set. Depending on the real-time case, the set used is either the one with the optical fiber probe 5 and the replaceable part 8 made of reels of optical fiber with substantially identical dispersion properties, or of the one with the optical fiber probe 5 and the replaceable part 8 made of reels of optical fiber with diverse dispersion properties.

In both cases ultimate matching between the arms of the optical interferometer is achieved, and thereby high in-depth resolution is accomplished as well.

### Industrial Applicability

The invention can be applied for imaging an object using reflectomety or optical coherence tomography methods for medical diagnostics of individual organs and systems including *in vivo* or *in vitro* diagnostics, the same as for industrial diagnostics such as control of technological processes. It should be noted that the invention may be implemented with the aid of standard facilities.

## Claims

1. An optical device for studying an object, comprising a low coherence light source optically coupled with an optical interferometer, which includes a measuring arm and a reference arm, the measuring arm including a probe, **characterized in that** at least one arm of the optical interferometer comprises at least one replaceable part with preset optical properties.

2. The optical device according to claim 1, **characterized in that** the probe is made replaceable.

3. The optical device according to claim 1, **characterized in that** the probe is made as an optical fiber probe.

4. The optical device according to claim 1, **characterized in that** the preset optical properties of the replaceable part of one arm of the optical interferometer are determined by the optical properties of at least a part of the other arm of the optical interferometer.

5. The optical device according to claim 4, **characterized in that** the reference arm includes at least one replaceable part whose preset optical properties are determined by the optical properties of the probe.

6. The optical device according to claim 5, **characterized in that** the replaceable part of the reference arm whose optical properties are determined by the optical properties of the probe, is made of optical fiber.

7. The optical device according to claim 5, **characterized in that** it is supplied with at least one replaceable set including an optical fiber probe and a replaceable part of the reference arm.

8. The optical device according to claim 7, **characterized in that** the optical fiber probe and the replaceable part of the reference arm are made of reels of optical fiber with substantially identical dispersion properties.

9. The optical device according to claim 7, **characterized in that** the optical fiber probe and the replaceable part of the reference arm are made of the same reel of optical fiber.

10. The optical device according to claim 7, **characterized in that** the optical fiber probe and the replaceable part of the reference arm are made of reels of optical fiber with diverse dispersion properties.

11. The optical device according to claim 5, **characterized in that** the measuring arm and the reference arm of the optical interferometer are made bi-directional, whereas the physical length of the replaceable part of the reference arm is substantially equal to the physical length of the probe.

12. The optical device according to claim 5, **characterized in that** the measuring arm of the optical interferometer is made bi-directional, while the reference arm of the optical interferometer is made unidirectional, herewith the physical length of the replaceable part of the reference arm is substantially double the physical length of the probe.

13. The optical device according to claim 5, **characterized in that** the measuring arm of the optical interferometer is made unidirectional, while the reference arm of the optical interferometer is made bi-directional, herewith the physical length of the replaceable part of the reference arm is substantially half the physical length of the probe.

14. The optical device according to claim 1, **characterized in that** the preset optical properties of the replaceable part of at least one arm of the optical interferometer are determined by the optical properties of the source of low coherence optical radiation.

15. The optical device according to claim 1, **characterized in that** the preset optical properties of the replaceable part of at least one arm of the optical interferometer are determined by the optical properties of the object being studied.

16. The optical device according to any one of the claims 1 - 15, **characterized in that** at least one replaceable part of at least one arm of the optical interferometer is made of bulk optical elements.

17. The optical device according to any one of the claims 1 - 15, **characterized in that** at least one arm of the optical interferometer includes an optical delay line.

18. The optical device according to any one of the claims 1 - 15, **characterized in that** at least one arm of the optical interferometer includes a phase modulator.

19. The optical device according to any one of the claims 1 - 15, **characterized in that** at least one arm of the optical interferometer is made of optical fiber.

20. The optical device according to claim 19, **characterized in that** the optical fiber is a single mode optical fiber.

21. The optical device according to claim 19, **characterized in that** the optical fiber is a polarization maintaining optical fiber.

22. The optical device according to any one of the claims 1 - 15, **characterized in that** the probe includes a lateral scanner.

23. The optical device according to any one of the claims 1 - 15, **characterized in that** the source of optical radiation is a source of visible or near IR optical radiation.

24. The optical device according to any one of the claims 1 - 15, **characterized in that** the replaceable part of an arm of the optical interferometer is connected with a non-replaceable part of the same arm of the optical interferometer via at least one detachable connector.

25. The optical device according to any one of the claims 1 - 15, **characterized in that** the reference arm includes a dispersion compensation unit.
